Europäisches Patentamt

European Patent Office

Office européen des brevets

(19)

(11) Veröffentlichungsnummer: **0 203 268 B1**

# (12) EUROPÄISCHE PATENTSCHRIFT

(45) Veröffentlichungstag der Patentschrift: **13.11.91**

(51) Int. Cl.⁵: **H02G 3/06**

(21) Anmeldenummer: **86102383.6**

(22) Anmeldetag: **24.02.86**

(54) **Kabelverschraubung mit Klemmeinsatz.**

(30) Priorität: **25.05.85 DE 3519030**

(43) Veröffentlichungstag der Anmeldung:
**03.12.86 Patentblatt 86/49**

(45) Bekanntmachung des Hinweises auf die
Patenterteilung:
**13.11.91 Patentblatt 91/46**

(84) Benannte Vertragsstaaten:
**CH DE FR GB IT LI**

(56) Entgegenhaltungen:
| EP-A- 0 040 485 | DE-A- 2 124 503 |
| FR-A- 2 306 391 | FR-A- 2 309 054 |
| GB-A- 576 862 | GB-A- 2 080 900 |
| US-A- 2 585 453 | US-A- 3 684 322 |
| US-A- 4 323 727 | |

(73) Patentinhaber: **Anton Hummel GmbH Metallwarenfabrik
Mozartstrasse 2 - 5
W-7808 Waldkirch(DE)**

(72) Erfinder: **Gehring, Peter
Eichhofweg
W-7809 Simonswald-Griesbach(DE)**

(74) Vertreter: **Patentanwälte Dipl.-Ing. Hans
Schmitt Dipl.-Ing. Wolfgang Maucher
Dreikönigstrasse 13
W-7800 Freiburg i.Br.(DE)**

EP 0 203 268 B1

**Beschreibung**

Die Erfindung betrifft eine Kabelverschraubung mit einer Schraubhülse, einer damit vorzugsweise mittels Gewinde verbindbaren Gegenhülse und einem damit oder dadurch gegen das Kabel oder einen Schutzschlauch anpreßbaren Klemmeinsatz gemäß dem Oberbegriff des Patentanspruches 1.

Kabelverschraubungen dienen zum Beispiel zum Einführen von Kabeln in Maschinen, Schaltschränke oder dergleichen oder zur Durchführung durch Wandungen und sind in verschiedenen Konstruktionen und Ausführungsformen bekannt.

Aus der GB-A-576 862 ist eine Kabelverschraubung bekannt, bei welcher ein Klemmeinsatz mit einer konischen Außenfläche von einem relativ zu ihm an der Außenseite verschiebbaren Gegenstück mit einem Innenkonus übergriffen ist, welches Gegenstück seinerseits mit Hilfe einer Überwurfmutter axial verschoben werden kann, so daß die erwähnte Relativbewegung gegenüber dem Klemmeinsatz mit Hilfe der Überwurfmutter durchführbar ist. Dabei hat der Klemmeinsatz am Ende im Bereich des größten Durchmessers seines Außenkonus einen Anschlag für das Gegenstück, so daß diese Axialbewegung beschränkt ist. Da die Konusflächen unter einem relativ schlanken oder spitzen Winkel ansteigen, ist eine entsprechend große Schraubbewegung erforderlich, um eine allmähliche radiale Verformung zu erreichen. Eine entsprechend große axiale Länge muß das Gewinde für die Überwurfmutter haben. Da die durch die Axialbewegung des Gegenkonus bewirkte radiale Verformung des Klemmeinsatzes durch seinen Anschlag beschränkt ist, können nur Schläuche oder Kabel mit einem genau passenden Außendurchmesser verklemmt werden.

Aus der US-A-2 585 453 ist eine Kabelverschraubung mit einem Klemmeinsatz mit einem schlanken Außenkonus bekannt, der über eine zwischenliegende Dichtung von einer Überwurfmutter beaufschlagt wird, die ihrerseits einen entsprechenden schlanken Innenkonus hat. In diesem Falle hat die Überwurfmutter an ihrer ihrem Gewinde abgewandten Stirnseite einen Anschlag, der wiederum die axiale Verstellbarkeit und damit die radiale Bewegung des Klemmeinsatzes begrenzt und es besteht auch dabei der Nachteil, daß relativ lange axiale Bewegungen der Überwurfmutter erforderlich sind, um allmählich eine radiale Bewegung des Klemmeinsatzes zu bewirken. Aufgrund dieser Konstellation können wiederum nur Kabel oder Schutzschläuche mit sehr geringen Abweichungen ihrer Außenabmessungen von einer solchen Kabelverschraubung erfaßt werden.

In der Praxis hat sich gezeigt, daß trotz vielfältiger auch sonstiger Lösungen von Kabelverschraubungen und dabei verwendeter Klemm- und Dichteinsätze die Kabel oder Schutzschläuche nach einiger Zeit wieder locker werden und die Dichtwirkung nach lassen kann.

Es besteht deshalb die Aufgabe, eine Kabelverschraubung gem. dem Oberbegriff des Patentanspruches 1 zu schaffen, bei welcher eine relativ geringe Axialbewegung der Schraubhülse oder ihrer Gegenhülse bereits eine relativ große Radialbewegung des Klemmeinsatzes bewirkt, so daß dieser schon nach einer in axialer Richtung kurzen Relativbewegung der beiden Hülsen in Wirkverbindung mit dem Kabel oder Schlauch steht, wobei dann der Klemmeinsatz selbsthemmend wirken soll, das heißt, seine Klemmkraft durch eine Belastung des Kabels gesteigert werden können soll.

Die Lösung dieser Aufgabe erfolgt mit den Merkmalen und Maßnahmen des kennzeichnenden Teiles des Patentanspruches 1.

Durch den steileren Konus des Klemmringes kann beim Verschrauben der Schraubhülse und der Gegenhülse durch eine relativ geringe Axialbewegung bereits eine relativ große Radialbewegung des Klemmringes bewirkt und diese in gleicher Weise auf den selbsthemmenden Klemmeinsatz übertragen werden, so daß dieser schon nach sehr kurzer Verschraubung der beiden Hülsen in Wirkverbindung mit dem Kabel oder Schlauch steht. Die wesentlich größere Axialbewegung einer Axialverstellung bei einem auf den spitzen Konus des selbsthemmenden Klemmeinsatzes wirkenden Gegenstückes wird also erheblich verkürzt oder umgekehrt ausgedrückt kann mit einer relativ geringen Axialverstellung eine große Radialbewegung an dem geschlitzten Klemmeinsatz durchgeführt werden, so daß dessen selbsthemmende Wirkung schneller erreicht wird bzw. Kabel mit erheblich verschiedenen Durchmessern erfaßt werden können, weil ein entsprechend großer Klemmbereich zur Verfügung steht.

Dabei kann der Klemmeinsatz von beiden Stirnseiten in axialer Richtung verlaufende Schlitze aufweisen, welche sich in der Mitte jeweils überlappen. Dadurch kann sich der Klemmeinsatz bei axialer Beaufschlagung möglichst gleichmäßig radial verformen.

Aufgrund der flachen Schrägung an dem Klemmeinsatz, die von einer entsprechenden Gegenschräge umgeben ist, ergibt sich bei einem Zug auf das Kabel, daß der Klemmeinsatz auch bei relativ geringer Anklemmung an dem Kabel zunächst dessen Bewegung folgen möchte. Dabei müßte er dann relativ zu der ihm umgebenden konischen Fläche axial verschoben werden, wodurch er von dieser Fläche stärker zusammengedrückt wird. Dies erhöht die Klemmkraft und verstärkt die selbsthemmende Wirkung, die durch den Klemmring schon nach relativ kurzer axialer Relativbewegung zwischen Schraubhülse und Gegenhülse erreicht wird.

Eine zweckmäßige Größenordnung des Konuswinkels des selbsthemmenden Klemmeinsatzes kann so gewählt werden, daß der spitze Konuswinkel in Abhängigkeit von der Oberflächenform der Innenseite des selbsthemmenden Klemmeinsatzes etwa 1 Grad bis 30 Grad, vorzugsweise etwa 1 Grad bis 20 Grad oder etwa 2 Grad bis 10 Grad zur Mittelachse des Klemmeinsatzes beträgt, und die der spitzwinkligen Seite des Klemmeinsatzes abgewandte Stirnseite kann plan oder stumpfwinkliger bzw. steiler sich verjüngend verlaufen. Je nach Werkstoffpaarung könnten aber auch den angegebenen Winkelbereichen benachbarte Konuswinkel einen selbsthemmenden Klemmeinsatz ergeben.

Der den selbsthemmenden Klemmeinsatz umgreifende Klemmring kann die der Schraubhülse zugewandte Stirnfläche des selbsthemmenden Klemmeinsatzes ganz oder teilweise freilassen. Dadurch können die Kräfte des zweiten Klemmringes vollständig auf den selbsthemmenden Klemmeinsatz übertragen werden, so daß die selbsthemmende Wirkung dieses Klemmeinsatzes bei Zugbelastung des Kabels voll wirksam wird. Dabei kann der den Klemmeinsatz außen umgreifende Klemmring die der Schraubhülse zugewandte Stirnseite des Klemmeinsatzes mit einem Ansatz übergreifen, dessen Breite gleich oder kleiner als die halbe Breite dieser übergriffenen Stirnseite des selbsthemmenden Klemmeinsatzes ist. Dadurch wird sichergestellt, daß der innere selbsthemmende Klemmeinsatz von der Aufbauchung des Kabels hintergriffen und schon bei der geringsten Zugbelastung vom Kabel in axialer Richtung in die Verjüngung seiner ihn außen umschließenden Umhüllung gezogen und radial zusammengepreßt wird.

Es ist aber auch möglich, daß der Klemmring an seinen beiden Stirnseiten je einen Konus mit jeweils entgegengesetzter Schräge hat, die einen stumpferen Konuswinkel als der selbsthemmende Klemmeinsatz aufweist, am Umfang verteilt abwechselnd nach der einen oder anderen Stirnseite offene, sich im Mittelbereich des Klemmringes vorzugsweise seitlich überlappende Schlitze hat, und den selbsthemmenden Klemmeinsatz auch an dessen steilerer Stirnseite ganz oder nahezu ganz übergreift. Ein solcher Klemmring kann durch die Verbindung von Schraubhülse und Gegenhülse einer auf seine gesamte axiale Erstreckung weitgehend gleichmäßigen radialen Verformung unter voller Beibehaltung des vorgebbaren selbsthemmenden Konuswinkels unterzogen werden, so daß sich eine gute Wirkung auch über die gesamte axiale Erstreckung des Klemmeinsatzes ergibt, so daß dieser seine selbsthemmende Klemmwirkung ohne Einschränkung gleichbleibend in jeder Klemmstellung, über den ganzen Konusbereich der vorgesehenen verschiedenen Kabeldurchmesser zuverlässig ausübt. Zweckmäßig ist es, wenn der Klemmeinsatz an seiner der Kabel- oder Schlauchoberfläche zugewandten Innenseite eine Profilierung, vorzugsweise eine im Längsschnitt gezahnte, insbesondere sägezahnförmige Oberfläche hat, bei welcher die spitzwinkligeren Zahnflanken in Zugrichtung des Kabels verlaufen. Beim Verklemmen eines solchen Zugentlastungseinsatzes mit der Kabeloberfläche können die erwähnten Profilierungen und Zähne sich in die Kabel- oder Schlauchoberfläche eindrücken und so einen Formschluß ergeben, der selbst bei einem gewissen Nachlassen der Klemmwirkung immer noch eine gute Verbindung zwischen Kabel oder Schlauch und Klemmeinsatz herstellt, so daß bei einer Zugbelastung die selbsthemmende Wirkung eintritt.

Besonders vorteilhaft und zweckmäßig kann es sein, wenn der selbsthemmende Klemmeinsatz etwa in seinem mittleren Bereich an seiner Innenseite einen Hohlraum zwischen zwei beidseits davon angeordneten Klemmstellen hat. Beim Verklemmen dieses Klemmeinsatzes mit dem Kabel werden so zwei etwas mit Abstand zueinander liegende Einschnürungen am Kabel erzeugt, zwischen denen sich das Kabel etwas aufbauchen wird. Diese Aufbauchung kann von dem Hohlraum aufgenommen werden und den Formschluß in Zugrichtung verbessern. Zusätzlich oder statt dessen könnte in diesem Hohlraum auch ein Dichtring untergebracht werden.

Ausgestaltungen der Erfindung insbesondere bezüglich eines axial dem selbsthemmenden Klemmeinsatz benachbarten Dichtringes und dessen Abstützung gegenüber dem Klemmeinsatz sind Gegenstand der Ansprüche 8 und Xg.

Zusätzlich oder statt dessen kann der selbsthemmende Klemmeinsatz an seiner Außenseite von einer Dichtung umschlossen sein, die ihrerseits von dem Klemmring übergriffen ist. In diesem Falle überträgt der Klemmring beim axialen Anziehen von Schraubhülse und Gegenhülse seine Klemmkraft nur mittelbar auf den selbsthemmenden Klemmeinsatz, weil dazwischen noch die erwähnte Dichtung vorgesehen ist. Entsprechend gleichmäßig werden die Klemmkräfte übertragen, wobei zusätzlich eine verbesserte Abdichtung der Kabelverschraubung erreicht wird. Dieser Kombination kommt deshalb vor allem bei Kabelverschraubungen mit hohen Anforderungen an die Dichtigkeit eine erhöhte Bedeutung zu.

Ausgestaltungen der den selbsthemmenden Klemmeinsatz außen umschließenden Dichtung in Relation zu dem Klemmring und dem selbsthemmenden Klemmeinsatz sind Gegenstand der Ansprüche 11 und 12.

Eine weitere Ausgestaltung der Erfindung, der selbständige Schutzwirkung zukommen kann, kann darin bestehen, daß zwei radial nachgiebige Klemmeinsätze, die voneinander getrennt oder einstückig miteinander verbunden sind, zwischen ihren Klemmbereichen einen axialen Abstand und einen Hohlraum zur Aufnahme zumindest des selbsthemmenden Klemmeinsatzes haben. Dabei können die äußeren Klemmeinsätze in ihrem Hohlraum einen Dichtring aufnehmen, der an seiner dem Kabel zugewandten Innenseite seinerseits den selbsthemmenden Klemmeinsatz insbesondere formschlüssig umschließt. Die beiden Klemmeinsätze können ihre Klemmkräfte sehr gleichmäßig mittelbar über den Dichtring oder unmittelbar auf den selbsthemmenden Klemmeinsatz ausüben. Entsprechend wirkungsvoll ist eine derartige Kabelverschraubung sowohl unmittelbar nach der Montage, als aber auch noch nach langer Zeit, wenn Materialermüdungen auftreten oder Dichtungswerkstoff oder Werkstoff der Kabelummantelung durch den permanenten Druck ausgewichen oder weggekrochen ist.

Das Zusammenwirken eines äußeren Klemmeinsatzes, eines Dichtringes und eines selbsthemmenden Klemmeinsatzes kann auch dadurch bewirkt sein, daß ein äußerer Klemmring von der Gegenhülse beaufschlagt ist, axial daneben ein Dichtring angeordnet ist und dieser Dichtring mit seiner dem äußeren Klemmring abgewandten Stirnseite einen mit einem spitzwinkligen Schrägungswinkel versehenen Klemmeinsatz an der spitzwinkligen Schräge übergreift. Durch die Verschraubung einer solchen Schraubhülse wird über den äußeren Klemmring eine Verklemmung mit dem Kabel, ferner eine Verklemmung der Dichtung und schließlich über die Druckbeaufschlagung der Dichtung auch der spitzwinklige Klemmeinsatz einer Verklemmung am Kabel ausgesetzt, so daß dieser spitzwinklige Klemmeinsatz eine selbsthemmende Wirkung ausüben kann. Dabei kann diese Kombinationswirkung sehr lange erhalten bleiben, da der Dichtungswerkstoff aufgrund der speziellen Anordnung vollständig zwischen den Klemmring und den Klemmeinsatz eingekammert ist und insbesondere im Bereich des spitzwinkligen Klemmeinsatzes nicht davonkriechen kann, weil er auf dessen Außenseite mit seinem Rand praktisch vollständig zwischen diesem Klemmeinsatz und der Schraubhülse eingeschlossen ist. Selbst bei sehr lang dauerndem Druck bei unterschiedlichen Temperaturen und Temperaturwechsel kann der Dichtring aufgrund dieser Anordnung seine Druckwirkung auf den selbsthemmenden Klemmeinsatz nicht verlieren.

Eine Abwandlung kann darin bestehen, daß der Dichtring zwischen zwei Klemmeinsätzen eingespannt ist, die gegeneinanderweisende flache Schrägen haben, die zumindest an ihren Randbereichen von dem zwischen ihnen befindlichen Dichtring übergriffen sind. Dadurch wird die Dichtung an ihren beiden Rändern am Davonkriechen auch im Laufe einer langen Zeit gehindert. Gleichzeitig erhält man selbsthemmend wirkende Klemmeinsätze mit gegensinnig gerichteten Wirkungen, so daß in beiden Richtungen auf das Kabel wirkende Zug- oder Stoßbelastungen selbsthemmend aufgefangen werden können.

Eine weitere Möglichkeit, eine Selbsthemmung des Klemmeinsatzes in beide möglichen Belastungsrichtungen des Kabels oder Schlauches zu erhalten, ist in Anspruch angegeben.

Weitere Ausgestaltungen der erfindungsgemäßen Kabelverschraubung und ihres selbsthemmenden Klemmeinsatzes insbesondere im Zusammenwirken mit einer Dichtung oder einem Gegendruckring sind Gegenstand der Ansprüche 18 bis 21.

Vor allem bei Kombination der vorbeschriebenen Merkmale und Maßnahmen ergibt sich ein mit einer selbsthemmenden flachen Steigung seiner Außenform versehener Klemmeinsatz, der über einen ihn umschließenden Klemmring mit beidseits stirnseitig steileren Steigungen über eine kurze Axialbewegung de r Schraubhülse und der Gegenhülse in radialer Richtung verformt werden kann, wobei die sich in axialer Richtung erstreckenden Schlitze von Klemmeinsatz bzw. Klemmring jeweils in der Mitte überlappen und dadurch eine gleichmäßige Verkleinerung des Querschnittes auf der ganzen Länge des Klemmeinsatzes unter Beibehaltung seiner äußeren selbsthemmenden Form ermöglichen. Es wird also durch herstellungstechnisch einfache Maßnahmen eine große Wirkung erzielt, durch die eine Kabelverschraubung auch nach langer Zeit eine Zugentlastung am Kabel bewirkt.

Nachstehend ist die Erfindung mit ihren ihr als wesentlich zugehörenden Einzelheiten anhand der Zeichnung noch näher beschrieben. Es zeigt in zum Teil schematisierter Darstellung und überwiegend im Längsschnitt oder Teillängsschnitt:

Fig 1    eine Kabelverschraubung mit einem in einer Zugrichtung des Kabels selbsthemmenden Klemmeinsatz, dessen spitzwinklig ausgebildete äußere Konusfläche von einem spitzwinkligen Innenkonus der Gegenhülse umschlossen ist, wobei der selbsthemmende Klemmeinsatz von einem Klemmring umschlossen ist, dessen Innenschräge der Außenschräge des selbsthemmenden Klemmeinsatzes entspricht und der seinerseits mit einem steileren Konus von der Gegenhülse beaufschlagt ist,

Fig. 2    einen der Fig. 1 etwa entsprechende Ausführungsform, bei welcher die Außenseite des selbsthemmenden Klemmeinsatzes gewölbt ist und der Klemmeinsatz zwischen zwei Klemmstellen einen inneren Hohlraum hat,

Fig. 3 eine den Figuren 1 und 2 etwa entsprechende Ausführungsform, wobei zwischen dem selbsthemmenden Klemmeinsatz und dem äußeren Klemmring eine etwa hülsenartige, der Schräge des Klemmeinsatzes folgende Dichtung angeordnet ist,

Fig. 4 eine Kabelverschraubung, bei welcher den den selbsthemmenden Klemmeinsatz außen übergreifende Klemmring in axialer Richtung fortgesetzt ist, wobei im Bereich der Fortsetzung ein Gegendruckring in eine Nut des Klemmringes eingreift,

Fig. 5 eine gegenüber Fig. 4 abgewandelte Ausführungsform, bei welcher der gesamte äußere Klemmring einschließlich seiner Fortsetzung an seiner dem Kabel bzw. dem selbsthemmenden Klemmeinsatz zugewandten Innenseite von einer hülsenartigen Dichtung überzogen ist,

Fig. 6 eine Kabelverschraubung, bei welcher der selbsthemmende Klemmeinsatz und ein ihn außem umschließender Klemmring zwischen einer Zwischenhülse und der Gegenhülse angeordnet sind, während die Zwischenhülse ihrerseits relativ zu der Schraubhülse verstellbar ist, wobei zwischen Zwischenhülse und Schraubhülse ein Dichtring angeordnet ist,

Fig. 7 eine Kabelverschraubung, bei welcher benachbart zu der Klemmanordnung, bestehend aus einem selbsthemmenden Klemmeinsatz und einem diesen außen umgreifenden Klemmring auf der Seite der Schraubhülse ein Dichtring mit einem Dichtlippenfortsatz vorgesehen ist,

Fig. 8 eine Kabelverschraubung mit einem selbsthemmenden Klemmeinsatz, bei welchem der ihn außen beaufschlagende Klemmring in axialer Richtung gegen die Schraubhülse hin eine Fortsetzung hat, die eine dort angeordnete Dichtung gegenüber dem Gewindebereich abschirmt,

Fig. 9 und 10 eine Kabelverschraubung, bei welcher in axialer Richtung zwei Klemmeinsätze nebeneinander angeordnet sind, deren einer einen steilen Außenkonus hat, während der andere mit Abstand dazu angeordnete Klemmeinsatz eine spitzwinklige Außenschräge hat, auf welcher der Randbereich einer zwischen beiden Klemmeinsätzen befindlich en Dichtung aufliegt,

Fig. 11 eine der Fig. 9 entsprechende Ausführungsform; bei welcher auch der in der Gegenhülse befindliche Klemmeinsatz selbsthemmend ist und an seiner Außenseite von einem Klemmring umschlossen ist,

Fig. 12 eine Ausführungsform mit zwei selbsthemmenden Klemmeinsätzen, deren Schrägen gegenläufig zueinander angeordnet sind, die einen Abstand und einen Dichtring zwischen sich aufweisen, wobei der Dichtring mit seinen Rändern jeweils auf der Außenseite der zueinandergewandten Randbereiche der selbsthemmenden Klemmeinsätze aufliegt,

Fig. 13 eine Kabelverschraubung, bei welcher der selbsthemmende Klemmeinsatz vollständig von einem Dichtring umschlossen ist, an dessen Außenseite ein zweiter Klemmring angreift, der den Dichtring mittels eines Fortsatz es gegenüber dem Gewindebereich abschirmt,

Fig. 14 einen Klemmeinsatz, der im wesentlichen dem der Fig. 13 entspricht, wobei jedoch der Dichtring in axialer Richtung gegenüber dem von ihm umschlossenen selbsthemmenden Klemmeinsatz übersteht und mit seinem Überstand eine gegen das Kabel gerichtete Dichtlippe bildet,

Fig. 15 eine Kabelverschraubung, bei welcher der selbsthemmende Klemmeinsatz zusammen mit einem ihn umschließenden Dichtring in einem Hohlraum zwischen teleskopartig zueinander verstellbaren Klemmringen angeordnet ist, wobei der selbsthemmende Klemmeinsatz in einer Zugrichtung des Kabels selbsthemmend ausgebildet ist,

Fig. 16 eine der Fig. 15 entsprechende Ausführungsform einer Kabelverschraubung, wobei der selbsthemmende Klemmeinsatz an seiner Außenseite eine flache, etwa symmetrische Wölbung hat und in beiden Kabelrichtungen selbsthemmend wirkt,

Fig. 17 bis 20 verschiedene Ausführungsbeispiele mit nach einer oder beiden Kabelrichtungen selbsthemmend wirkenden Klemmeinsätzen, die an der Außenseite von einer Dichtung übergriffen sind, die in axialer Richtung im Bereich der Schraubhülse einen dichtlippenartigen Fortsatz hat und an der Außenseite von einem die Dichtung gegenüber dem Gewindebereich abschirmenden Klemmring übergriffen ist.

In der nachfolgenden Beschreibung der einzelnen Ausführungsbeispiele der erfindungsgemäßen, im ganzen mit 1 bezeichneten Kabelverschraubung erhalten gleichwirkende Teile auch bei verschiedenem Aussehen übereinstimmende Bezugszeichen und werden nicht immer bei jeder Figur erneut vollständig beschrieben. Anhand einzelner Ausführungsbeispiele erwähnte Wirkungen und Merkmale gelten insofern auch für solche Ausführungsbeispiele, bei denen diese Merkmale und Maßnahmen nicht erneut erläutert sind.

Den dargestellten Kabelverschraubungen 1 ist gemeinsam, daß sie jeweils eine Schraubhülse 2 und eine damit mittels Gewinde verbindbare Gegenhülse 3 und einen damit oder dadurch gegen das nicht näher dargestellte Kabel oder einen Schutzschlauch anpreßbaren Klemmeinsatz 4 aus härterem Werkstoff als der Kabelmantel aufweist. Zusätzlich kann noch ein Dichtungseinsatz 5 vorhanden sein, wobei die Gegenhülse 3 den Klemmeinsatz 4 bzw. den Dichtungseinsatz 5 außen und vorzugsweise mit einer Ringfläche 6 oder 11 an der Stirnseite übergreift und beim Anziehen des Gewindes einen mit axialen Schlitzen 7 versehenen Bereich des Klemmeinsatzes 4 oder auch den stauchbaren Dichtung seinsatz 5 radial gegen das Kabel hin verformt, das Kabel festlegt und mittelbar oder unmittelbar abdichtet. Die Schlitze 7 sind nach der oder den Stirnseiten des Klemmeinsatzes 4 hin offen und erlauben beim Festklemmen dessen radiale Verformung.

Wichtig ist bei allen Ausführungsbeispielen, daß der Längsschnitt des Klemmeinsatzes 4 an seiner Außenseite 8 eine spitzwinklig verlaufende Schräge oder Krümmung aufweist, die in Richtung der Zugbelastung des Kabels, also in dessen Erstreckungsrichtung, d. h. in axialer Richtung der Kabelverschraubung 1, von einem größeren zu einem kleineren Durchmesser übergeht, wobei der Schrägungswinkel - bei allen Ausführungsbeispielen deutlich erkennabr - so klein gewählt ist, daß bei Zugbelastung am Kabel eine Selbsthemmung dadurch auftritt, daß das Kabel bei einer derartigen Zugbelastung den an ihm kraft- und/oder formschlüssig anliegenden Klemmeinsatz 4 in axialer Richtung mitnimmt, wodurch die spitzwinklige Schräge eine Verstärkung der Klemmkraft bewirkt, was bei einer Erhöhung der Zugkraft weiter gesteigert wird. Die Zugkraft bewirkt also selbst eine verstärkte Verklemmung und Hemmung am Klemmeinsatz 4.

Dabei wirkt mit, daß die Schrägfläche des Klemmeinsatzes 4 von einer im Winkel ihr entsprechenden analogen Schräge einer äußeren Umhüllung umschlossen ist, die in den verschiedenen Ausführungsbeispielen unterschiedlich gestaltet sein kann und sich in der Schraubhülse 2 und/oder der Gegenhülse 3 abstützt, Wie bereits erwähnt, kann zwischen der spitzwinkliegen Form des inneren Klemmeinsatzes und der spitzwinkligen Form der Umhüllung eine vorteilhafte Formabweichung oder Oberflächenabweichung zur Verkleinerung der Berührungsfläche vorhanden sein, wodurch bei einer durch eine Zugbelastung verursachten Axialverschiebung der beiden Klemmeinsätze zueinander die Reibung vermindert und dadurch der innere Einsatz vom Kabel leichter mitgenommen und zusammengepreßt wird.

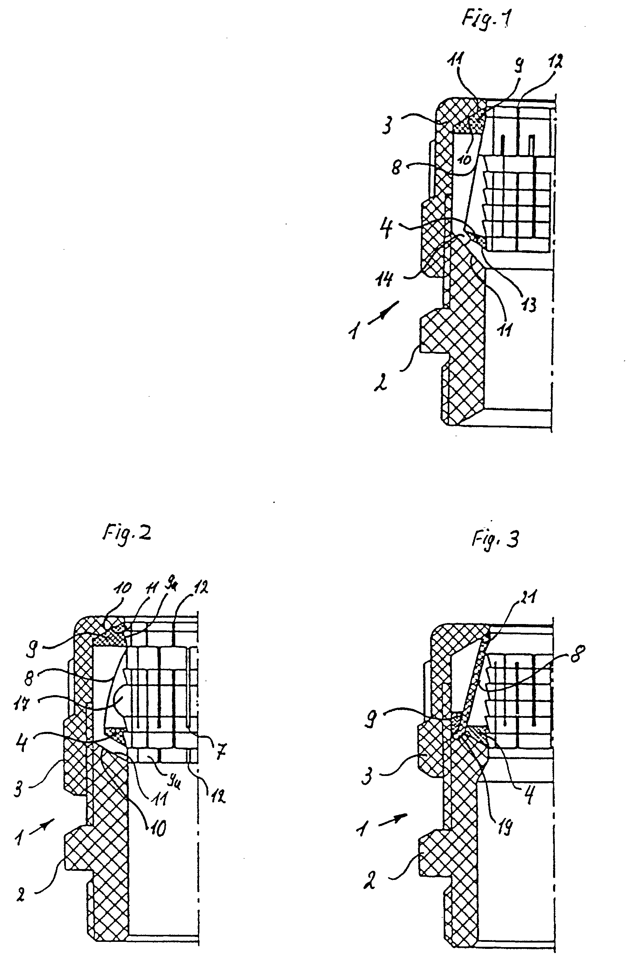

Es bewirkt also die Verschraubung der Gegenhülse aufgrund der schlanken und spitzwinkligen Konusfläche durch die axiale Relativbewegung eine unmittelbar auf den Klemmeinsatz 4 wirkende radiale Verformung, wobei der Klemmeinsatz 4 die schon erwähnte selbsthemmende Wirkung dann hat, wenn ein im Inneren dieser Kabelverschraubung 1 befindliches Kabel einer Zugbelastung ausgesetzt ist, die in der Darstellung der Fig. 1 nach oben, also in der Richtung gerichtet wäre, in welcher die Außenseite des Klemmeinsatzes 4 allmählich von dem größeren zu dem kleineren Durchmesser hin schräg abfällt.

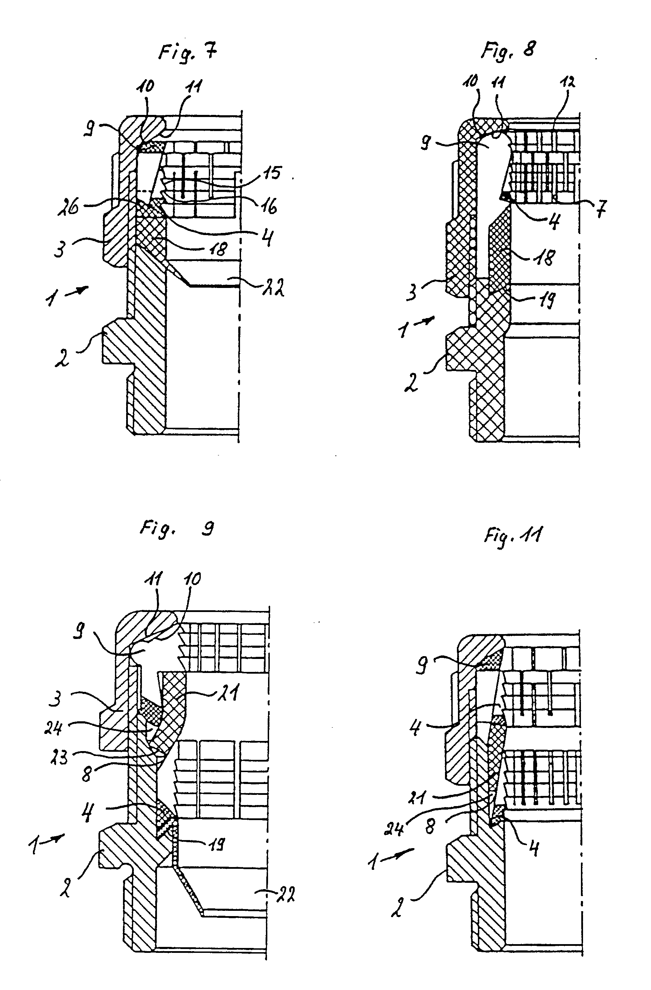

In den Figuren 1 bis 8 und 11 ist jeweils eine Kabelverschraubung 1 dargestellt, bei welcher an der Außenseite 8 des mit einem spitzen Konuswinkel versehenen selbsthemmenden Klemmeinsatzes 4 ein ihn umgreifender Klemmring 9 vorgesehen ist, der an seiner Stirn- oder Außnseite 10 entweder gemäß Fig. 8 eine Rundung oder gemäß den übrigen Figuren einen Konuswinkel hat, welcher von dem spitzen Konuswinkel des selbsthemmenden Klemmeinsatzes 4 abweicht und zwar demgegenüber eine größere Steigung hat. Dabei ist dieser Klemmring 9 in seinem Konusbereich ebenfalls geschlitzt und von einem Innenkonus 11 der Gegenhülse 3, in Fig. 2 zusätzlich noch ein em entsprechenden Innenkonus 11 der Schraubhülse 2 übergriffen. Werden Schraubhülse 2 und Gegenhülse 3 axial zusammengeschraubt, wird diese Axialbewegung über die Innenkonusse 11 auf den Klemmring 9 übertragen, wodurch dieser dank seiner Schlitze 12 radial nach innen ausweicht. Man erkennt sofort, daß aufgrund des wesentlich steileren Konuswinkels eine viel geringere axiale Verstellung der beiden Hülsen 2 und 3 gegeneinander hin erforderlich ist, um eine entsprechend starke Radialbewegung zu erzielen. Da diese auf den selbsthemmenden Klemmeinsatz 4 übertragen wird, erhält dieser entsprechend schnell seine Wirkung.

Der Konuswinkel des selbsthemmenden Klemmeinsatzes, d.h. der Winkel, den die Außenseite 8 etwa von dem kleinsten Durchmesser des Klemmeinsatzes 4 mit der entsprechenden Meridianlinie des Kabels einschließt, kann etwa 1° bis 30°, vorzugsweise gemäß den dargestellten Ausführungsbeispielen 1° bis 20°, gegebenenfalls aber auch 2° bis 10° zur Mittelachse des Klemmeinsatzes betragen oder einen sonstigen Zwischenwert haben. Bei entsprechender Form- und Oberflächenpaarung bzw. Werkstoffwahl kann gegebenenfalls sogar ein noch etwas größerer Winkel zu der gewünschten Selbsthemmung führen, wobei dieser Konuswin kel für die Selbsthemmung notfalls durch Versuche festgestellt werden kann.

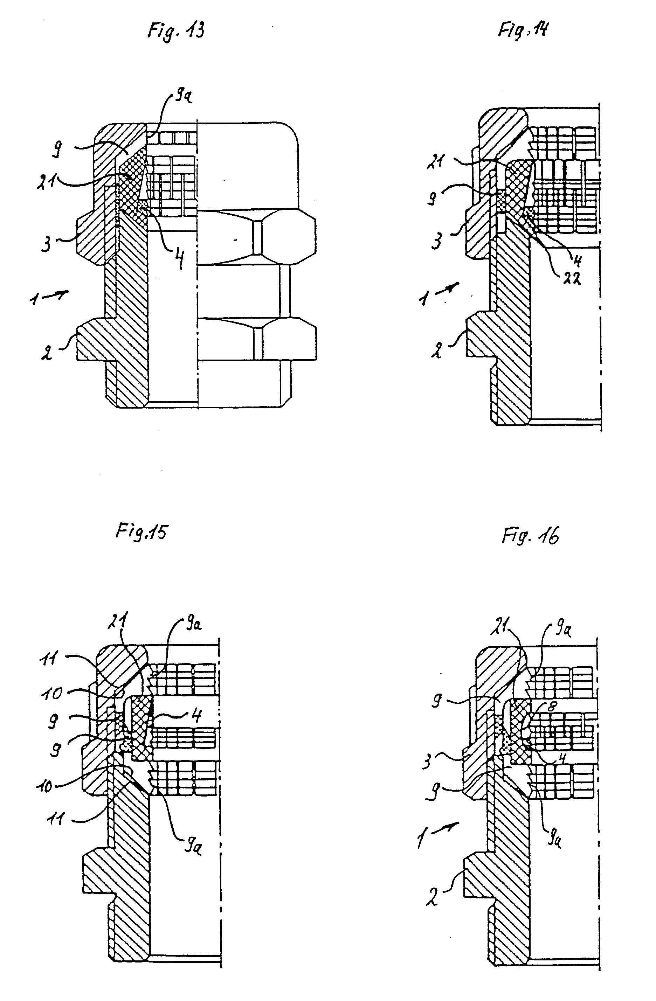

Gemäß Fig. 1 oder 3 oder beispielsweise auch gemäß Fig. 11 kann der den selbsthemmenden Klemmeinsatz 4 umgreifende Klemmring 9 die der Schraubhülse 2 zugewandte steilere Stirnfläche 13 des selbsthemmenden Klemmeinsatzes 4 ganz oder teilweise freilassen. Dadurch wird die selbsthemmende Wirkung des Klemmeinsatzes 4 voll wirksam, indem der selbsthemmende Klemmeinsatz 4 durch das sich aufbauchende Kabel hintergriffen und bei Zugbelastung sofort mitgenommen und immer stärker zusammengepreßt wird. Dabei kann der Klemmring 9 den Klemmeinsatz 4 an der der Schraubhülse 2 zugewandten steileren Stirnseite 13 des Klemmeinsatzes 4 mit einem Ansatz 14 übergreifen, dessen Breite gleich oder kleiner als die halbe Breite dieser übergriffenen Stirnseite 13 des selbsthemmenden Klemmeinsatzes 4 ist, wie man es beispielsweise in Fig. 1 erkennt. Die spitzwinklige Außenseite 8 des Klemmeinsatzes 4 ist jedoch über ihre gesamte axiale Erstreckung von dem Klemmring 9 übergriffen, wobei die Berührungsfläche durch Hohlräume unterbrochen, verkleinert sein kann. Entsprechend gleichmäßig werden die Verformungen des Klemmringes 9 auf den Klemmeinsatz 4 übertragen.

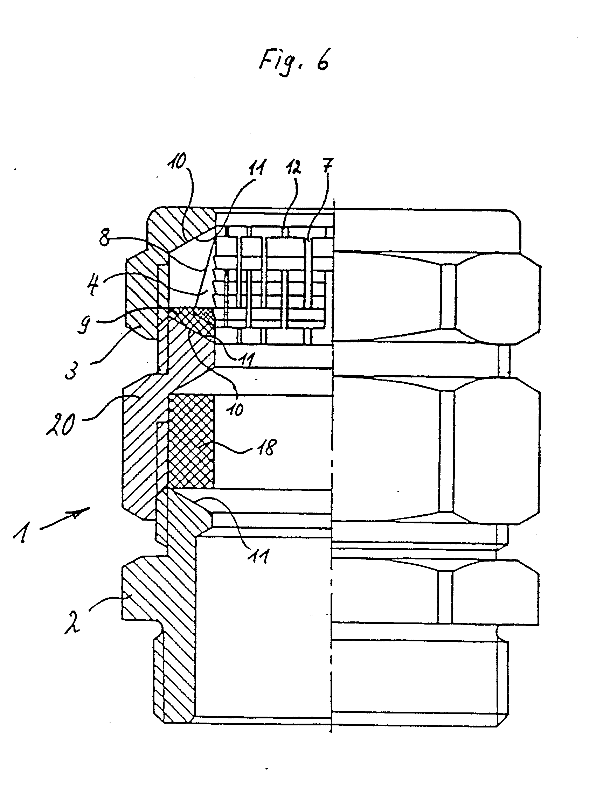

Beispielsweise in den Figuren 2 und 6 hat der Klemmring 9 an seinen beiden Stirnseiten 10 je einen Konus mit jeweils entgegengesetzter Schräge, die einen stumpferen Konuswinkel als der selbsthemmende Klemmeinsatz 4 aufweisen. Ferner sind am Umfang verteilt abwechselnd nach der einen oder anderen Stirnseite 10 offene, sich im Mittelbereich des Klemmringes 9 vorzugsweise seitlich überlappende Schlitze 12 vorhanden und der selbsthemmende Klemmeinsatz 4 ist auch an seiner steileren Stirnfläche 13 ganz oder nahezu ganz übergriffen. Dadurch ergibt sich eine noch vorteilhaftere, gleichmäßigere radiale Verformung des Klemmringes 9 unter Beibehaltung der spitzen selbsthemmenden Form mit entsprechend guter Auswirkung auf den Klemmeinsatz 4, so daß dieser auch bei völliger Umschließung auch der steilen Stirnfläche 13 seine selbsthemmende Wirkung erhält und voll entfalten kann.

In allen Ausführungsbeispielen erkennt man, daß der der Zugentlastung dienende Klemmeinsatz 4 an seiner der Kabel- oder Schlauchoberfläche zugewandten Innenseite eine Profilierung, vorzugsweise eine im Längsschnitt gezahnte, insbesondere sägezahnförmige Oberfläche hat, bei welcher die spitzwinkligeren Zahnflanken 15 in Zugrichtung des Kabels verlaufen, so daß die steileren Zahnflanken 16 bei Zugbelastung eine widerhakenartige Wirkung auf das Kabel ausüben. Dadurch kann die Selbsthemmung des Klemmeinsatzes 4 unterstützt und verstärkt werden, weil schon eine relativ geringe Eindrückung dieser Zahnflanken in die Kabeloberfläche bei eventuell nachlassender Klemmkraft dazu führt, daß ein gewisser Formschluß entsteht. Wird nun an dem Kabel gezogen, reicht dieser Formschluß aus, um den Klemmeinsatz 4 in axialer Richtung so weit mitzunehmen, daß seine schrägflächige Außenseite mit der Gegenschräge zusammen zu einer stärkeren radialen Verformung dieses Einsatzes 4 führt. Somit auch auch dann die selbsthemmende Klemmwirkung noch gegeben.

In den Ausführungsbeispielen nach Fig. 2 und 17 erkennt man bei den selbsthemmenden Klemmeinsätzen 4 etwa in dessen mittleren Bereich an seiner Innenseite einen Hohlraum 17 zwischen zwei beidseits davon angeordneten profilierten Klemmstellen. Dieser Hohlraum 17 kann eine größere Aufbauchung des Kabels bei entsprechend starker Verklemmung und Einschnürung an den Klemmstellen aufnehmen, wodurch sich der Formschluß und auch die Dichtwirkung des Kabel-Oberflächenmateriales gegenüber dem Klemmeinsatz 4 verbessert.

Insbesondere zur Verbesserung der Dichtung, gleichzeitig aber auch zur mittelbaren Übertragung der Klemmkräfte ist bei einigen Ausführungsbeispielen, etwa gemäß Fig. 7, 8 oder in gewissem Sinne auch 13 oder 17 bis 20 vorgesehen, daß sich der selbsthemmende Klemmeinsatz 4 und/oder der ihn übergreifende äußere Klemmring 9 mit ihrer gegen die Schraubhülse 2 gerichteten Stirnseite an einem axial benachbarten Dichtring 18 oder 21 mittelbar oder unmittelbar abstützen. der seinerseits an einem schrägen Stützlager 19 oder einer Auflage der Schraubhülse 2 anliegt und beim Verschrauben der Schraubhülse 2 und der Gegenhülse 3 durch deren Axialbewegung zusammendrückbar ist und seine Druckkräfte auf die Klemmeinsätze und Klemmringe überträgt.

Eine mittelbare Abstützung ist dabei in Fig. 6 vorgesehen, bei welcher der Dichtring 18 in einer Zwischenhülse 20 angeordnet ist, relativ zu der einerseits die Gegenhülse 3 und andererseits die Schraubhülse 2 verstellbar ist, wobei zwischen der Zwischenhülse 20 und der Gegenhülse 3 der Klemmeinsatz 4 und der Klemmring 9 und zwischen der Zwischenhülse 20 und der Schraubhülse 2 der Dichtring 18 angeordnet sind, so daß die Dichtwirkung und die Klemmwirkung unabhängig voneinander eingestellt werden können.

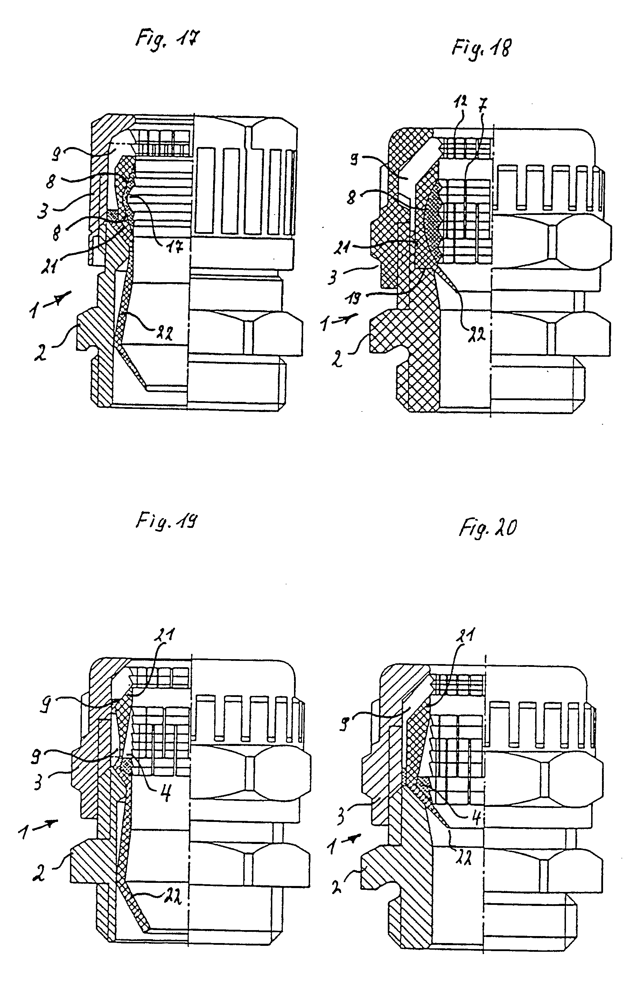

Bei einer Reihe von Ausführungsbeispielen der Kabelverschraubung 1, z. B. gemäß den Figuren 13 bis 20, ist der selbsthemmende Klemmeinsatz 4 an seiner Außenseite von einer Dichtung umschlossen, die ihrerseits von dem zweiten Klemmring 9 übergriffen ist, wobei dieser Klemmring 9 unterschiedliche Formen haben kann. Dabei erkennt man in den Figuren 14 und 17 bis 20, daß der Dichtring 21 auf seiner dem oder den Klemmeinsätzen 4 abgewandten Seite eine Dichtlippe 22 aufweisen kann, die schräg oder radial gegen das Kabel hin gerichtet ist und die Dichtwirkung erhöhen kann. Diese Dichtlippe ragt dabei über den inneren Klemmeinsatz 4 axial hinaus und wird in Gebrauchsstellung entsprechend fest eingespannt, so daß auch an dieser Stelle eine Lockerung der Kabelverschraubung 1 im Laufe der Zeit weitestgehend ausgeschlossen ist.

Dabei erkennt man ferner, daß der Dichtring 21 mit seiner der Gegenhülse 3 abgewandten Stirnseite 23 unter dem zweiten Klemmring 9 vorsteht und sich stirnseitig an einer radialen oder schrägen Auflage als Stützlager 19 der Schraubhülse 2 abstützt. Beispielsweise in Fig. 18 geht dann von diesem Stützlager 19 die Dichtlippe 22 der Dichtung 21 aus.

In den Figuren 2 und 5 ist eine Abwandlung angedeutet, bei welcher die den selbsthemmenden Klemmeinsatz 4 umschließende Dichtung 21 beidseits aus dem sie selbst umgreifenden Klemmring 9 vorsteht und im Bereich ihrer Abstützung durch den Klemmring 9 hindurch in das Stützlager 19 der Schraubhülse 2 eingreift und eindrückbar ist. Entsprechend gut ist diese Dichtung 21 gegen Davonkriechen auch unter Druck und Temperaturschwankungen gesichert. In beiden Fällen greift dabei die Dichtung 21 mit einem Rand in eine nutenartige ringförmige Hinterschneidung an der Innenseite der Schraubhülse 2, wodurch der Dichtungsrand radial nach der Innenseite hin übergriffen und vom Klemmring 9 abdichtend auf diese Übergreifung am Stützlager 19 gepreßt wird.

Neben den schon erwähnten Lösungen mit einem äußeren, den Klemmeinsatz 4 beaufschlagenden weiteren Klemmring 9 sind Ausführungsbeispiele vorgesehen, bei welchen zwei radial nachgiebige Klemmringe 9, die voneinander getrennt oder einstückig miteinander verbunden sind, zwischen ihren Klemmbereichen 9a einen axialen Abstand und einen Hohlraum 24 zur Aufnahme zumindest des selbsthemmenden Klemmeinsatzes 4 haben.

Fig. 2 zeigt praktisch zwei einstückig verbundene Klemmringe 9 mit einem solchen Hohlraum, der zwischen den beiden Klemmbereichen 9a angeordnet ist und den selbsthemmenden Klemmeinsatz 4 umschließt.

Vergleichbar ist die Anordnung nach Fig. 6.

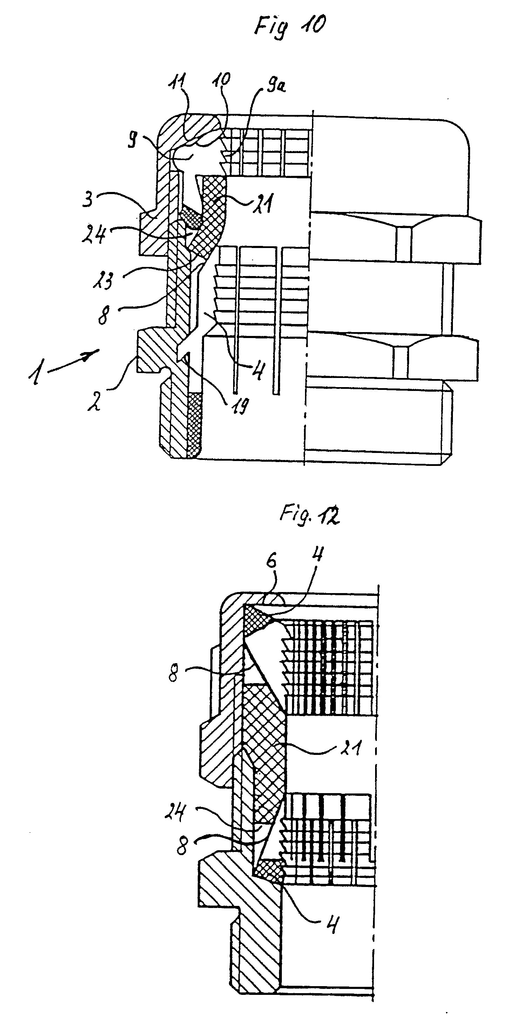

Zwei getrennte Klemmringe 9 bzw. 4 mit einem Abstand und Hohlraum zwischen sich erkennt man in den Figuren 9 bis 12, 15 und 16. Bei den Figuren 15 und 16 können die beiden Klemmringe 9 sogar axial etwas teleskopartig übereinandergeschoben werden.

In den Ausführungsbeispielen nach Fig. 15 und 16 ist ferner vorgesehen, daß die äußeren Klemmringe 9 in ihrem Hohlraum 24 die Dichtung 21 aufnehmen, die an ihrer dem Kabel zugewandten Innenseite ihrerseits den selbsthemmenden Klemmeinsatz 4 insbesondere formschlüssig umschließt. In diesem Falle sind die Vorteile kurzer axialer Verstellbewegungen für größtmögliche Klemmwirkung und gute Dichtwirkung mit der selbsthemmenden Zugentlastung kombiniert.

Die Figuren 9 bis 12 sind Ausführungsbeispiele, bei welchen ein äußerer Klemmring 9 von der Gegenhülse 3 beaufschlagt ist, axial daneben ein Dichtring 21 angeordnet ist, und dieser Dichtring 21 mit seiner dem äußeren Klemmring 9 abgewandten Stirnseite einen mit einer spitzwinkligen Außenseite 8 versehenen Klemmeinsatz 4 an dieser spitzwinkligen Schräge übergreift. Somit trägt die Dichtung 21 dazu bei, daß der selbsthemmende Klemmeinsatz 4 zur Wirkung gelangt, umgekehrt schützt aber dieser Klemmeinsatz 4 wiederum die Dichtung gegen ein Davonkriechen unter Druck und unter Temperaturbelastungen.

Gemäß Fig. 12 kann dabei der Dichtring 21 sogar zwischen zwei Klemmeinsätzen 4 eingespannt sein, die gegeneinanderweisende spitzwinklige Außenseiten 8 haben, die zumindest in ihren Randbereichen von dem zwischen ihnen befindlichen Dichtring 21 übergriffen sind. In diesem Falle ergeben sich durch diese beiden Klemmeinsätze 4 selbsthemmende Zugentlastungen in beiden denkbaren Zugrichtungen eines Kabels.

Eine andere Möglichkeit, selbsthemmende Zugentlastungswirkungen nach beiden Orientierungsrichtungen eines Kabels oder Schlauches zu erreichen, zeigen die Ausführungsbeispiele nach Fig. 16, 17 und 18. In diesem Falle hat der Klemmeinsatz 4 von einem etwa mittleren Bereich mit größtem Außendurchmesser ausgehend in beide Axialrichtungen eine äußere Form mit geringem Gefälle, d.h. in entgegengesetzter Richtung eine schwache Steigung bzw. spitzwinklig abfallende Außenseite 8, wobei diese von diesem größten Durchmesser gegen das Kabel hin abfallen und dabei gegebenenfalls flach gewölbt sein können. Auch in diesem Falle sind die Außenseiten 8 von radial nachgebenden oder sich verengenden Bereichen umschlossen, so daß sie gegen das Kabel oder den Schlauch anpreßbar sind und bei Zug- oder Stoßbelastungen nun in beiden Richtungen des Kabels selbsthemmend wirken.

Wie bereits erwähnt, kann der den selbsthemmenden Klemmeinsatz 4 außen übergreifende Dichtring 21 an der dem selbsthemmenden spitzwinkligen Konusbereich abgewandten Abstützseite des Klemmringes 9 über diesen radial nach innen als Dichtlippe 22 fortgesetzt sein. Gemäß Fig. 17 und 19 kann diese Fortsetzung dabei sogar eine Auskleidung der Schraubhülse 2 bilden, so daß die Isolierwirkung verbessert wird.

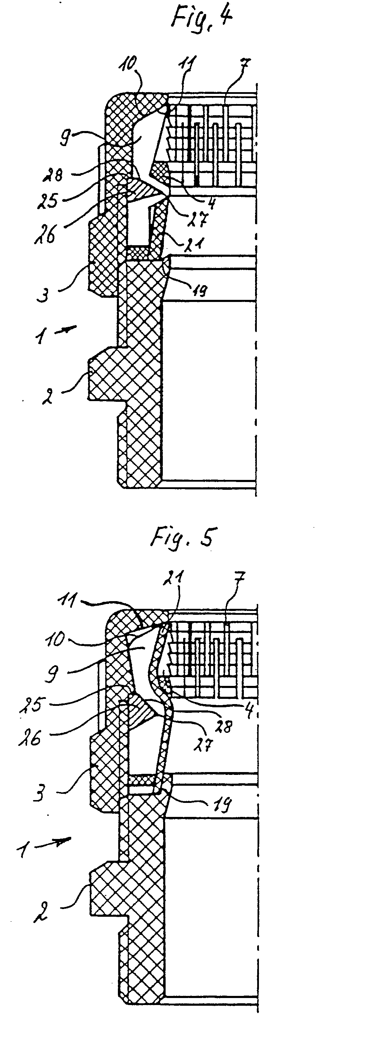

In den Figuren 4 und 5 erkennt man Beispiele, bei denen die Gegenhülse 3 einen Absatz 25 oder Anschlag und einen daran auf der der Schraubhülse 2 zugewandten Seite anliegenden Gegendruckring 26 aufweist, der in eine Außennut 27 des in axialer Richtung beidseits dieses Gegendruckringes 26 befindlichen Klemmringes 9 eingreift. Ferner erkennt man, daß eine bei einer Axialbewegung des Klemmringes 9 durch die Schraubbewegung der Gegenhülse 3 als Konus wirksame Anschlagfläche 28 zum radialen Verformen des geschlitzten Klemmringes 9 auch im Bereich des Gegendruckringes 26 vorgesehen ist und daß der selbsthemmende Klemmeinsatz 4 in dem Bereich des Klemmringes 9 eingeschlossen ist und zwischen dem Innenkonus 11 der Gegenhülse 3 und dem Gegendruckring 26 angeordnet sich beim Zusammenpressen auf seiner ganzen axialen Länge gleichmäßig an das Kabel legt. Somit kann der selbsthemmende Klemmeinsatz 4 zwischen dem Innenkonus 11 und dem Gegendruckring 26 zur Wirkung gebracht werden, gleichzeitig aber die Dichtwirkung und die Abstützung des Klemmringes 9 an der Schraubhülse 2 verbessert werden.

In Fig. 4 und 5 erkennt man ferner, daß der über den Gegendruckring 26 ragende äußere Klemmring 9 an seiner Innenseite mit einer hülsenartigen Dichtung 21 ausgekleidet ist, wobei diese Auskleidung im Ausführungsbeispiel als axiale Erstreckung des Klemmringes 9 verläuft und sogar darüber hinaus ragt und so eine bestmögliche Abdichtung auch der Schlitze 7 und 12 bewirkt. Dabei ist der Gegendruckring 26 an seinen beiden Stirnflächen gegensinnig konisch und sein Längsschnitt verjüngt sich in radialer Richtung nach innen verlaufend trapez- oder dreieckförmig. Somit kann eine axiale Verschiebung des Gegendruckringes 26 über die zweite konische Stirnseite die Fortsetzung des Klemmringes 9 in radialer Richtung verformen.

## Patentansprüche

1. Kabelverschraubung (1) mit einer Schraubhülse (2), einer damit, vorzugsweise mittels Gewinde, verbindbaren Gegenhülse (3) und einem damit oder dadurch gegen das Kabel oder einen Schutzschlauch anpreßbaren Klemmeinsatz (4) aus vorzugsweise härterem Werkstoff als der Kabelmantel und/oder mit einem Dichtungseinsatz (5), wobei die Gegenhülse (3) den Klemmeinsatz (4) bzw. Dichtungseinsatz (5) außen und vorzugsweise mit einer Ringfläche (6) an der Stirnseite übergreift und beim Anziehen des Gewindes einen axial geschlitzten Bereich des Klemmeinsatzes (4) und/oder den stauchbaren Dichtungseinsatz (5) radial gegen das Kabel hin verformt, das Kabel festlegt und mittelbar oder unmittelbar abdichtet, wobei der Klemmeinsatz (4) nach der Stirnseite hin offene, beim Festklemmen eine radiale Verformung erlaubende Schlitze (7) hat und sein Längsschnitt an seiner Außenseite (8) eine spitzwinklig verlaufende Schräge oder Krümmung aufweist, die in Richtung der Zugbelastung des Kabels von einem größeren zu einem kleineren Durchmesser übergeht, wobei der Schrägungswinkel so klein ist, daß bei Zugbelastung der zum weiteren radialen Zusammenpressen des Klemmeinsatzes (4) benötigte radiale Anpreßdruck durch die Wirkung der schlanken Formgebung kleiner ist, als die durch das eingeschnürte Kabel auf der Innenseite des Klemmeinsatzes (4) wirksam werdende axiale Zugkraft, so daß der Klemmeinsatz (4) vom Kabel mitgenommen und durch die zumindest bereichsweise etwa seiner äußeren Form entsprechende Verjüngung seiner Umhüllung, die sich in der Schraubhülse (2) und/oder der Gegenhülse (3) abstützt und/oder an deren Innenseite(n) vorgesehen ist, in radialer Richtung immer stärker zusammengepreßt wird, eine zunehmend größere Klemmkraft auf der Kabel- oder Schlauchoberfläche wirksam werden läßt, **dadurch gekennzeichnet**, daß an der Außenseite (8) des Klemmeinsatzes (4) ein ihn umgreifender Klemmring (9) oder dergleichen vorgesehen ist, der ein- oder beidseitig an seiner Stirn- oder Außenseite (10) eine Rundung oder einen Konuswinkel hat, welcher von dem spitzen Konuswinkel des Klemmeinsatzes (4) abweicht und insbesondere demgegenüber eine größere Steigung hat, in diesem Konusbereich geschlitzt ist und von einem Innenkonus (11) oder stirnseitigen Ring der Gegenhülse (3) und/oder der Schraubhülse (2) mittelbar oder unmittelbar übergriffen ist.

2. Kabelverschraubung nach Anspruch 1, dadurch gekennzeichnet, daß der Klemmeinsatz (4) von beiden Stirnseiten in axialer Richtung verlaufende Schlitze (7) aufweist, welche sich in der Mitte jeweils überlappen.

3. Kabelverschraubung nach Anspruch 1 oder 2, dadurch gekennzeichnet, daß der spitze Konuswinkel in Abhängigkeit von der Oberflächenform der Innenseite des selbsthemmenden Klemmeinsatzes etwa 1° bis 30°, vorzugsweise etwa 1° bis 20° oder etwa 2° bis 10° zur Mittelachse des Klemmeinsatzes beträgt, und die der spitzwinkligen Seite des Klemmeinsatzes abgewandte Stirnseite plan oder stumpfwinkliger bzw. steiler sich verjüngend verläuft.

4. Kabelverschraubung nach einem der Ansprüche 1 bis 3, dadurch gekennzeichnet, daß der den selbsthemmenden Klemmeinsatz (4) umgreifende Klemmring (9) die der Schraubhülse (2) zugewandte runde, schräge oder plane Stirnfläche (13) des selbsthemmenden Klemmeinsatzes (4) ganz oder teilweise freiläßt.

5. Kabelverschraubung nach Anspruch 4, dadurch gekennzeichnet, daß der den Klemmeinsatz (4) außen umgreifende Klemmring (9) die der Schraubhülse (2) zugewandte steilere Stirnseite (13) des Klemmeinsatzes (4) mit einem Ansatz (14) übergreift, dessen Breite gleich oder kleiner als die halbe Breite dieser übergriffenen Stirnseite (13) des selbsthemmenden Klemmeinsatzes (4) ist.

6. Kabelverschraubung nach einem der Ansprüche 1 bis 3, dadurch gekennzeichnet, daß der Klemmring (9) an seinen beiden Stirnseiten (10) je eine Rundung oder einen Konus mit jeweils entgegengesetzter Schräge hat, die einen stumpferen Konuswinkel als der selbsthemmende Klemmeinsatz (4) aufweisen, am Umfang verteilt abwechselnd nach der einen oder anderen Stirnseite (10) offene, sich im Mittelbereich des Klemmringes (9) vorzugsweise seitlich überlappende Schlitze (12) hat, und den selbsthemmenden Klemmeinsatz (4) auch an dessen steileren Stirnfläche (13) ganz oder nahezu ganz übergreift.

7. Kabelverschraubung nach einem der Ansprüche 1 bis 6, dadurch gekennzeichnet, daß der Klemmeinsatz (4) an seiner der Kabel- oder Schlauchoberfläche zugewandten Innenseite eine Profilierung, vorzugsweise eine im Längsschnitt gezahnte, insbesondere sägezahnförmige Oberfläche hat, bei welcher die spitzwinkligeren Zahnflanken (15) in Zugrichtung des Kabels verlaufen.

8. Kabelverschraubung nach einem der Ansprüche 1 bis 7, dadurch gekennzeichnet, daß der selbsthemmende Klemmeinsatz (4) etwa in seinem mittleren Bereich an seiner Innenseite einen Hohlraum (17) zwischen zwei beidseits davon angeordneten Klemmstellen hat.

9. Kabelverschraubung nach einem der Ansprüche 1 bis 8, dadurch gekennzeichnet, daß sich der selbsthemmende Klemmeinsatz (4) und/oder der ihn übergreifende äußere Klemmring (9) mit ihrer gegen die Schraubhülse (2) gerichtete Stirnseite an einem axial benachbarten Dichtring (18) mittelbar oder unmittelbar abstützen, der seinerseits an einem schrägen Stützlager (19) od. dgl. der Schraubhülse (2) anliegt und beim Verschrauben der Schraubhülse (2) und der Gegenhülse (3) durch deren Axialbewegung zusammendrückbar ist.

10. Kabelverschraubung nach einem der Ansprüche 1 bis 9, dadurch gekennzeichnet, daß der selbsthemmende Klemmeinsatz (4) an seiner Außenseite von einer Dichtung (21) umschlossen ist, die ihrerseits von dem Klemmring (9) übergriffen ist.

11. Kabelverschraubung nach Anspruch 10, dadurch gekennzeichnet, daß der Dichtring (21) auf seiner dem oder den Klemmeinsätzen (4) abgewandten Seite eine Dichtlippe (22) aufweist, die schräg oder radial gegen das Kabel hin gerichtet ist.

**12.** Kabelverschraubung nach Anspruch 11, dadurch gekennzeichnet, daß die Dichtung (21) mit ihrer der Gegenhülse (3) abgewandten Stirnseite (23) unter dem zweiten Klemmring (9) vorsteht und/oder sich stirnseitig an einem radialen oder schrägen stützlager (19) der Schraubhülse (2) abstützt, oder von dem Klemmring auf eine radial ebene oder schräge Auflage der Schraubhülse (2) abdichtend angepreßt wird.

**13.** Kabelverschraubung nach Anspruch 10 oder 11, dadurch gekennzeichnet, daß die den selbsthemmenden Klemmeinsatz (4) umschließende Dichtung (21) beidseits aus dem sie selbst umgreifenden Klemmring (9) vorsteht und/oder im Bereich ihrer Abstützung durch den Klemmring (9) in das Stützlager (19) der Schraubhülse (2) eingreift und eindrückbar ist.

**14.** Kabelverschraubung nach einem der vorstehenden Ansprüche, dadurch gekennzeichnet, daß zwei radial nachgiebige Klemmringe (9), die voneinander getrennt oder einstückig miteinander verbunden sind, zwischen ihren Klemmbereichen (9a) einen axialen Abstand und einen Hohlraum (24) zur Aufnahme zumindest des selbsthemmenden Klemmeinsatzes (4) haben.

**15.** Kabelverschraubung nach Anspruch 14, dadurch gekennzeichnet, daß die äußeren Klemmringe (9) in ihrem Hohlraum (24) die Dichtung (21) aufnehmen, die an ihrer dem Kabel zugewandten Innenseite ihrerseits den selbsthemmenden Klemmeinsatz (4) insbesondere formschlüssig umschließt.

**16.** Kabelverschraubung nach einem der Ansprüche 1 bis 15, dadurch gekennzeichnet, daß ein äußerer Klemmring (9) von der Gegenhülse (3) beaufschlagt ist, axial daneben ein Dichtring (21) angeordnet ist und dieser Dichtring (21) mit seiner dem äußeren Klemmring (9) abgewandten Stirnseite einen mit einer spitzwinkligen Außenseite (8) versehenen Klemmeinsatz (4) an der spitzwinkligen Schräge übergreift.

**17.** Kabelverschraubung nach Anspruch 15 oder 16, dadurch gekennzeichnet, daß der Dichtring (21) zwischen zwei Klemmeinsätzen (4) eingespannt ist, die gegeneinanderweisende spitzwinklige Außenseiten (8) haben, die zumindest an ihren Randbereichen von dem zwischen ihnen be findlichen Dichtring (21) übergriffen sind.

**18.** Kabelverschraubung nach einem der vorstehenden Ansprüche, dadurch gekennzeichnet, daß der selbsthemmende Klemmeinsatz (4) von einem etwa mittleren Bereich mit größtem Außendurchmesser ausgehend in eine oder beide Axialrichtungen eine äußere Form mit geringem Gefälle, d. h. in entgegengesetzter Richtung eine schwache Steigung hat, z B. eine spitzwinklige, gegen das Kabel hin abfallende Schräge oder flache Wölbung aufweist, welche beim Verschrauben der Kabelverschraubung von radial nachgebenden oder sich verengenden Bereichen umschlossen gegen das Kabel oder den Schlauch anpreßbar und bei Zug- oder Stoßbelastungen in beiden Richtungen des Kabels selbsthemmend ist.

**19.** Kabelverschraubung nach einem der vorstehenden Ansprüche, dadurch gekennzeichnet, daß der den selbsthemmenden Klemmeinsatz (4) außen umgreifende äußere Klemmeinsatz an seiner der spitzen Schräge oder flachen Wölbung zugewandten Innenseite eine abweichende Form oder Oberfläche aufweist, so daß der selbsthemmende Klemmeinsatz beim radialen Zusammenpressen von dem äußeren Klemmeinsatz nur stellenweise berührt ist und sich zwischen den Berührungsflächen reibungsmildernde Hohlräume befinden.

**20.** Kabelverschraubung nach einem der Ansprüche 1 bis 19, dadurch gekennzeichnet, daß die Berührungsfläche ringförmig oder in axialer Richtung stegförmit oder punktförmig ausgebildet ist.

**21.** Kabelverschraubung nach einem der Ansprüche 1 bis 20, dadurch gekennzeichnet, daß die Schlitze der beiden Klemmeinsätze von beiden Stirnseiten in axialer Richtung so weit über die Mitte des Klemmeinsatzes hinausgeführt sind, daß sich bei axialer Druckbelastung des Klemmeinsatzes seine beidseitigen Klemmfinger nicht abbiegen, sondern sich parallel zur Mittelebene in radialer Richtung bewegen.

**22.** Kabelverschraubung nach einem der Ansprüche 1 bis 21, dadurch gekennzeichnet, daß der den selbsthemmenden Klemmeinsatz (4) außen übergreifende Dichtring (21) an der dem selbsthemmenden spitzwinkligen Konusbereich abgewandten Abstützstelle des Klemmringes (9) über diesen radial nach innen als Dichtlippe (22) und/oder Auskleidung der Schraubhülse (2) fortgesetzt ist.

**23.** Kabelverschraubung nach einem der vorstehenden Ansprüche, dadurch gekennzeichnet, daß die Gegenhülse (3) einen Absatz (25) od.

dgl. Anschlag und einen daran auf der der Schraubhülse (2) zugewandten Seite anliegenden Gegendruckring (26) aufweist, der in einer Außennut (27) des in axialer Richtung beidseits des Gegendruckringes (26) befindlichen Klemmringes (9) eingreift, daß eine bei einer Axialbewegung des Klemmringes (9) durch die Schraubbewegung der Gegenhülse (3) als Konus wirksame Anschlagfläche (28) zum radialen Verformen des geschlitzten Klemmringes (9) auch im Bereich des Gegendruckringes (26) vorgesehen ist und daß der selbsthemmende Klemmeinsatz (4) in dem Bereich des Klemmringes (9) eingeschlossen ist, der zwischen dem Innenkonus (11) der Gegenhülse (3) und dem Gegendruckring (26) angeordnet ist.

24. Kabelverschraubung nach Anspruch 23, dadurch gekennzeichnet, daß der über den Gegendruckring (26) ragende äußere Klemmring (9) an seiner Innenseite mit einer Dichtung (21) ausgekleidet ist, insbesondere wenigstens im Bereich des von ihm umschlossenen selbsthemmenden Klemmeinsatzes.

25. Kabelverschraubung nach Anspruch 23 oder 24, dadurch gekennzeichnet, daß der Gegendruckring (26) an seinen beiden Stirnflächen gegensinnig konisch ist und sich sein Längsschnitt in radialer Richtung nach innen verlaufend trapez- oder dreieckförmig verjüngt.

## Claims

1. A screw-threaded cable fitting (1) including a screwed sleeve (2), a counter-sleeve (3) connectable thereto, preferably threadedly, and a clamping insert (4) which is adapted to be pressed therewith or thereby against the cable or a protective tube or hose and is preferably made of harder material than the cable sheath and/or further including a sealing insert (5), the counter-sleeve (3) engaging over the clamping insert (4) and/or sealing insert (5) outwardly and preferably with a ring area (6) at the face and, as the thread is fastened, deforming an axially slit area of the clamping insert (4) and/or the compressible sealing insert (5) radially towards the cable, fixing and indirectly or directly sealing the cable, the clamping insert (4) having slits (7) which are open towards the face and permit radial deformation during clamping and the longitudinal section of the clamping insert, at the outer surface (8) thereof, having an acute-angled slope or curvature passing from a larger to a smaller diameter in the direction of tensile load of the cable, the angle of inclination being so small that, upon tensile load, the radial pressure required for radially compressing the clamping insert (4) further is - through the effect of the slender shape - smaller than the axial tensile force taking effect on the inside of the clamping insert (4) through the constricted cable, so that the clamping insert (4) is entrained by the cable and is increasingly compressed in the radial direction through the taper of the covering supported in the screwed sleeve (2) and/or counter-sleeve (3) and/or provided at the inside(s) thereof, said taper at least in areas approximating the outer form of said clamping insert, permitting an increasing clamping force to take effect on the surface of the cable or tube, **characterized in that** at the outer surface (8) of the clamping insert (4) a clamping ring (9) or the like is provided and embraces said clamping insert, said clamping ring having on one or on both sides, at the face or outer surface (10) thereof, a curvature or a cone angle which deviates from - in particular has a greater gradient than - the acute cone angle of the clamping insert (4) and being slit in said cone area, and an inner cone (11) or end ring of the counter-sleeve (3) and/or of the screwed sleeve (2) indirectly or directly engages over said clamping ring.

2. A screw-threaded cable fitting as claimed in claim 1, characterized in that the clamping insert (4) has slits (7) running from both faces in an axial direction and in each case overlapping in the centre.

3. A screw-threaded cable fitting as claimed in claim 1 or claim 2, characterized in that the acute cone angle, in dependence on the surface shape of the inside of the self-locking clamping insert, is about 1° to 30°, preferably about 1° to 20° or about 2° to 10° to the central axis of the clamping insert, and the face averted from the acute-angled side of the clamping insert takes a plane course or one tapering at a more obtuse angle or steeper.

4. A screw-threaded cable fitting as claimed in any one of claims 1 to 3, characterized in that that round, inclined or plane face (13) of the self-locking clamping insert (4) which confronts the screwed sleeve (2) is left entirely or partly free by the clamping ring (9) embracing the self-locking clamping insert (4).

5. A screw-threaded cable fitting as claimed in claim 4, characterized in that the clamping ring (9) outwardly embracing the clamping insert (4) has a projection (14) with which it engages over that face (13) of the clamping insert (4) which confronts the screwed sleeve (2), the width of said projection being equal to or smaller than half the width of said covered face (13) of the self-locking clamping insert (4).

6. A screw-threaded cable fitting as claimed in any one of claims 1 to 3, characterized in that the clamping ring (9) has at each of the two faces (10) thereof a curvature or cone of opposed inclination having a more obtuse cone angle than the self-locking clamping insert (4), said clamping ring further having slits (12) which are distributed at the circumference, are open towards the one or other face (10) alternately and overlap preferably laterally in the centre area of the clamping ring (9), and said clamping ring engaging entirely or almost entirely over the self-locking clamping insert (4) also at the steeper face (13) of the latter.

7. A screw-threaded cable fitting as claimed in any one of claims 1 to 6, characterized in that, facing the surface of the cable or tube, the inside of the clamping, insert (4) has a profiling, preferably a surface toothed in longitudinal section, particularly sawtooth-shaped, wherein the more acute-angled faces (15) of the teeth run in the direction of pull of the cable.

8. A screw-threaded cable fitting as claimed in any one of claims 1 to 7, characterized in that the self-locking clamping insert (4) has approximately in the central area thereof, at the inside, a cavity (17) between two clamping locations arranged on either side.

9. A screw-threaded cable fitting as claimed in any one of claims 1 to 8, characterized in that the self-locking clamping insert (4) and/or the outer clamping ring (9) engaging over the latter have that face thereof which is directed toward the screwed sleeve (2) supported indirectly or directly against an axially adjacent sealing ring (18), said sealing ring for its part resting against an inclined step bearing (19) or the like of the screwed sleeve (2) and, when the screwed sleeve (2) and counter-sleeve (3) are screwed together, being compressible through their axial movement.

10. A screw-threaded cable fitting as claimed in any one of claims 1 to 9, characterized in that the self-locking clamping insert (4) is exteriorly enclosed by a seal (21) over which, in turn, the clamping ring (9) engages.

11. A screw-threaded cable fitting as claimed in claim 10, characterized in that on that side of the sealing ring (21) which is averted from the clamping insert(s) (4) the sealing rinse (21) has a sealing lip (22) directed slantwise or radially towards the cable.

12. A screw-threaded cable fitting as claimed in claim 11, characterized in that the seal (21) with the face (23) thereof averted from the counter-sleeve (3) projects under the second clamping ring (9) and/or is facially supported against a radial or inclined step bearing (19) of the screwed sleeve (2) or is sealingly pressed by the clamping ring onto a radially plane or inclined support of the screwed sleeve (2).

13. A screw-threaded cable fitting as claimed in claim 10 or claim 11, characterized in that the seal (21) enclosing the self-locking clamping insert (4) projects on both sides of the clamping ring (9) embracing the seal and/or in the area of the seal support engages and is pressable through the clamping ring (9) into the step bearing (19) of the screwed sleeve (2).

14. A screw-threaded cable fitting as claimed in any one of the preceding claims, characterized in that two radially yielding clamping rings (9), which are separate from one another or integrally connected to one another, have between their clamping zones (9a) an axial space and a cavity (24) for receiving at least the self-locking clamping insert (4).

15. A screw-threaded cable fitting as claimed in claim 14, characterized in that the cavity (24) of the outer clamping rings (9) accommodates the seal (21) which, at the inside thereof facing the cable, for its part encloses the self-locking clamping insert (4) particularly in a form-locking manner.

16. A screw-threaded cable fitting as claimed in any one of claims 1 to 15, characterized in that an outer clamping ring (9) is acted upon by the counter-sleeve (3), a sealing ring (21) is arranged axially adjacent thereto and said sealing ring (21) with the face thereof averted from the outer clamping ring (9) engages over the acute-angled outer surface (8) of a clamping insert (4) provided therewith.

17. A screw-threaded cable fitting as claimed in claim 15 or claim 16, characterized in that the sealing ring (21) is gripped between two clamping inserts (4) having acute-angled outer surfaces (8) pointing in opposite directions, the interposed sealing ring (21) engaging over at least the edge zones of said outer surfaces.

18. A screw-threaded cable fitting as claimed in any one of the preceding claims, characterized in that the self-locking clamping insert (4) - starting from an approximately central area of maximum outside diameter - has in one or both axial directions an external form with a slight descent, i.e. in the opposite direction a gentle ascent, e.g. an acute-angled slope sloping off toward the cable or a curvature of large radius, when the screw-threaded cable fitting is screwed together said slope or curvature enclosed by radially yielding or contracting areas being pressable against the cable or tube and being self-locking in both directions of the cable upon tensile or impact load.

19. A screw-threaded cable fitting as claimed in any one of the preceding claims, characterized in that the outer clamping insert outwardly embracing the self-locking clamping insert (4) has at the inside thereof facing the acute slope or curvature of large radius a deviating shape or surface, so that when the self-locking clamping insert is radially compressed the same is contacted only in places by the outer clamping insert and between the contact areas there are cavities reducing the friction.

20. A screw-threaded cable fitting as claimed in any one of claims 1 to 19, characterized in that the contact area is devised to be annular or, in the axial direction, web-like or punctiform.

21. A screw-threaded cable fitting as claimed in any one of claims 1 to 20, characterized in that the slits of the two clamping inserts are directed axially from both faces so far beyond the centre of the clamping insert that, upon axial pressurization of the clamping insert, the clamping fingers on both sides thereof do not deflect but move in a radial direction, parallel to the centre plane.

22. A screw-threaded cable fitting as claimed in any one of claims 1 to 21, characterized in that the sealing ring (21) outwardly engaging over the self-locking clamping insert (4) is extended radially inwardly as a sealing lip (22) and/or lining of the screwed sleeve (2) at and beyond that supporting location of the clamping ring (9) which is averted from the self-locking acute-angled cone area.

23. A screw-threaded cable fitting as claimed in any one of the preceding claims, characterized in that the counter-sleeve (3) has a shoulder (25) or like stop and resting thereagainst on the side facing the screwed sleeve (2) the counterpressure ring (26) engaging an outer groove (27) of the clamping ring (9) situated in the axial direction on either side of the counterpressure ring (26), that a stop face (28) - which takes effect as a cone when the clamping ring (9) is moved axially through the screw movement of the counter-sleeve (3) and serves for radially deforming the slit clamping ring (9) - is also provided in the region of the counterpressure ring (26) and that the self-locking clamping insert (4) is enclosed in that area of the clamping ring (9) which is arranged between the inner cone (11) of the counter-sleeve (3) and the counterpressure ring (26).

24. A screw-threaded cable fitting as claimed in clam 23, characterized in that the outer clamping ring (9) projecting over the counterpressure ring (26) is interiorly lined with a seal (21), particularly at least in the area of the self-locking clamping insert enclosed by said ring.

25. A screw-threaded cable fitting as claimed in claim 23 or claim 24, characterized in that the counterpressure ring (26) is conical in opposite directions at the two faces thereof and the longitudinal section thereof tapers radially inwardly in a trapezoidal or triangular shape.

## Revendications

1. Accessoire de câble fileté (1), comprenant une douille filetée (2), une contre-douille (3) pouvant être reliée à elle, de préférence par un filetage, une pièce insérée ou insert de serrage 14) pouvant être pressé avec ou au moyen d'elle contre le câble ou contre un tuyau de protection, l'insert étant de préférence d'un matériau plus dur que la gaine du câble, et/ou un élément inséré ou insert d'étanchéité (5), dans lequel la contre-douille (3) recouvre l'insert de serrage (4) ou l'insert d'étanchéité (5) extérieurement et de préférence par une surface annulaire (6), à l'extrémité, et déforme, lors du serrage de la liaison filetée, une zone fendue axialement de l'insert de serrage (4) et/ou de l'insert d'étanchéité (5), susceptible d'être refoulé, la déformation s'effectuant radialement en direction du câble, ce qui fixe le câble et assure son étanchéité, indirectement ou directement, dans lequel l'insert de serrage (4) possède des fentes (7) ouvertes vers l'extrémité et autorisant une déformation radiale lors du serrage et son profil en coupe longitudinale présentant à son côté extérieur (8) une rampe ou une courbure à angle aigu, laquelle passe, en direction de la contrainte de traction exercée sur le câble, d'un diamètre relativement grand à un diamètre plus petit, l'angle d'inclinaison étant si petit que, sous une contrainte de traction, la pression radiale nécessaire à la poursuite de la compression de l'insert de serrage (4) est plus petite, grâce à l'effet de la forme effilée, que la force de traction axiale agissant sur le côté intérieur de l'insert de serrage (4) par le câble étranglé, de sorte que l'insert de serrage (4) est entraîné par le câble et radialement comprimé de plus en plus fortement par le rétrécissement, correspondant approximativement à sa forme extérieure, tout au moins par endroits, de l'élément qui l'enveloppe, lequel s'appuie dans la douille filetée (2) et/ou la contredouille (3) et/ou est prévu sur son ou leurs côté(s) intérieur(s), de manière à faire agir une force de serrage augmentant de plus en plus sur la surface du câble ou du tuyau, caractérisé en ce que, sur le côté extérieur (8) de l'insert de serrage (4) on a prévu une bague de serrage (9) ou un élément analogue qui entoure l'insert et présente unilatéralement ou bilatéralement, à son côté d'extrémité ou côté extérieur (10), un arrondi ou un angle de cône qui diffère de l'angle de cône aigu de l'insert de serrage (4) et forme en particulier une plus grande pente que celui-ci, qui est fendu dans cette zone conique et est recouvert indirectement ou directement d'un cône intérieur (11) ou d'une bague d'extrémité de la contre-douille (3) et/ou de la douille filetée (2).

2. Accessoire de câble fileté selon la revendication 1, caractérisé en ce que l'insert de serrage (4) présente des fentes (7) orientées axialement, qui s'étendent à partir des deux extrémités et se chevauchent au milieu.

3. Accessoire de câble fileté selon la revendication 1 ou 2, caractérisé en ce que, en fonction de la forme de la surface sur le côté intérieur de l'insert de serrage autobloquant, l'angle de cône aigu est d'environ 1° à 30°, de préférence d'environ 1° à 20° ou d'environ 2° à 10° par rapport à l'axe de l'insert de serrage, et l'extrémité de l'insert de serrage opposée à celle présentant l'angle aigu, possède une forme plane ou se rétrécit sous un angle plus obtus ou avec une plus forte pente.

4. Accessoire de câble fileté selon une des revendications 1 à 3, caractérisé en ce que la bague de serrage (9) entourant l'insert de serrage autobloquant (4), laisse totalement ou partiellement libre la surface d'extrémité (13) ronde, oblique ou plane, dirigée vers la douille filetée (2), de l'insert de serrage autobloquant (4).

5. Accessoire de câble fileté selon la revendication 4, caractérisé en ce que la bague de serrage (9) entourant extérieurement l'insert de serrage (4), recouvre l'extrémité (13) de plus forte pente de l'insert de serrage (4), extrémité qui est dirigée vers la douille filetée (2), par un appendice (14) dont la largeur est égale ou inférieure à la moitié de la largeur de cette extrémité (13) recouverte de l'insert de serrage autobloquant (4).

6. Accessoire de câble fileté selon une des revendications 1 à 3, caractérisé en ce que la bague de serrage (9) présente, sur ses deux extrémités (10), des arrondis ou des cônes de pentes contraires et ayant un angle de cône plus obtus que l'insert de serrage autobloquant (4), possède des fentes (12) réparties circonférentiellement, s'ouvrant alternativement vers l'une ou l'autre extrémité (10) et chevauchantes, de préférence latéralement, dans la zone médiane de la bague de serrage (9), et recouvre l'insert de serrage autobloquant (4) également, complètement ou presque complètement, à sa face d'extrémité (13) de plus forte pente.

7. Accessoire de câble fileté selon une des revendications 1 à 6, caractérisé en ce que l'insert de serrage (4) présente, sur son côté intérieur, dirigé vers la surface du câble ou du tuyau, un profilage, de préférence une surface dentée en coupe longitudinale, notamment en dents de scie, dont les flancs de dents (15) d'angle plus aigu sont orientés dans la direction suivant laquelle une traction est exercée sur le câble.

8. Accessoire de câble fileté selon une des revendications 1 à 7, caractérisé en ce que l'insert de serrage autobloquant (4) présente sur son côté intérieur, à peu près dans sa zone médiane, un creux (17) situé entre deux points de serrage placés de part et d'autre de ce creux.

9. Accessoire de câble fileté selon une des revendications 1 à 8, caractérisé en ce que l'insert de serrage autobloquant (4) et/ou la bague de serrage (9) extérieure qui recouvre cet insert, s'appuient, par leur extrémité dirigée vers la douile filetée (2), indirectement ou directement, sur une bague d'étanchéité (18) axialement voisine, appliquée elle-même contre un appui oblique (19) ou un élément analogue de la douille filetée (2) et pouvant être comprimée, par suite de leur mouvement axial, lorsque la douille filetée (2) et la contre-douille (3) sont vissées l'une dans l'autre.

10. Accessoire de câble fileté selon une des revendications 1 à 9, caractérisé en ce que l'insert de serrage autobloquant (4) est entouré sur son côté extérieur par un joint d'étanchéité (21), lui-même coiffé par la bague de serrage (9).

11. Accessoire de câble fileté selon la revendication 10, caractérisé en ce que la bague d'étanchéité (21) présente, sur son côté éloigné du ou des inserts de serrage (4), une lèvre d'étanchéité (22) dirigée obliquement ou radialement vers le câble.

12. Accessoire de câble fileté selon la revendication 11, caractérisé en ce que le joint d'étanchéité (21) dépasse sous la seconde bague de serrage (9) par son extrémité (23) opposée à la contre-douille (3) et/ou s'appuie par son extrémité sur un appui radial ou oblique (19) de la douille filetée (2), ou est pressé de façon étanche par la bague de serrage contre une surface d'appui radiale plane ou oblique de la douille filetée (2).

13. Accessoire de câble fileté selon la revendication 10 ou 11, caractérisé en ce que le joint d'étanchéité (21) entourant l'insert de serrage autobloquant (4), dépasse des deux côtés de la bague de serrage (9) qui l'entoure et/ou pénètre et peut être pressé, dans la région de son appui, à travers la bague de serrage (9) dans l'appui (19) de la douille filetée (2).

14. Accessoire de câble fileté selon une des revendications précédentes, caractérisé en ce que deux bagues de serrage (9) radialement élastiques, qui sont séparées l'une de l'autre ou sont reliées ensemble d'un seul tenant, présentent, entre leurs zones de serrage (9a), une distance axiale et un creux (24) pour recevoir au moins l'insert de serrage autobloquant (4).

15. Accessoire de câble fileté selon la revendication 14, caractérisé en ce que les bagues de serrage (9) extérieures reçoivent, dans leur creux (24), le joint d'étanchéité (21) dont le côté intérieur dirigé vers le câble entoure l'insert de serrage autobloquant (4), notamment en établissant avec lui une liaison par imbrication de formes.

16. Accessoire de câble fileté selon une des revendications 1 à 15, caractérisé en ce qu'une bague de serrage extérieure (9) est sollicitée par la contredouille (3), une bague d'étanchéité (21) est disposée axialement à côté d'elle et cette bague d'étanchéité (21) recouvre, par son extrémité opposée à la bague de serrage (9) extérieure, une partie oblique à angle aigu d'un insert de serrage (4) pourvu d'un côté extérieur (8) à angle aigu.

17. Accessoire de câble fileté selon la revendication 15 ou 16, caractérisé en ce que la bague d'étanchéité (21) est serrée entre deux inserts (4) qui possèdent des côtés extérieurs (8) à angle aigu, dirigés l'un vers l'autre, dont au moins les zones marginales sont recouvertes par la bague d'étanchéité (21) située entre eux.

18. Accessoire de câble fileté selon une des revendications précédentes, caractérisé en ce que l'insert de serrage autobloquant (4) possède, partant d'une zone à peu près médiane ayant le plus grand diamètre extérieur, dans une ou dans les deux directions axiales, une forme extérieure de faible inclinaison vers le bas c'est-à-dire une faible pente montante en direction contraire, par exemple une rampe ou un faible bombement, à angle aigu, dont la hauteur diminue en s'approchant du câble, qui peut être pressé contre le câble ou le tuyau, lorsque les parties de l'accessoire de câble sont vissées l'une dans l'autre, par des zones qui l'entourent et sont radialement élastiques ou se rétrécissent radialement, et qui est autobloquant dans les deux sens du câble sous des contraintes de traction ou de chocs.

19. Accessoire de câble fileté selon une des revendications précédentes, caractérisé en ce que l'insert de serrage extérieur, entourant extérieurement l'insert de serrage autobloquant (4), présente, sur son côté intérieur dirigé vers la rampe ou le bombement à angle aigu, une forme ou une surface différente, de sorte que l'insert de serrage extérieur vient seulement par endroits en contact avec l'insert de serrage autobloquant lorsque ce dernier est radialement comprimé par l'insert extérieur, et des alvéoles réduisant le frottement sont prévus entre les surfaces en contact.

20. Accessoire de câble fileté selon une des revendications 1 à 19, caractérisé en ce que la surface de contact possède une forme annulaire ou est configurée en direction axiale par des nervures ou des points.

21. Accessoire de câble fileté selon une des revendications 1 à 20, caractérisé en ce que les fentes des deux inserts de serrage, partant des deux extrémités et s'étendant en direction axiale, sont prolongées au-delà du milieu de l'insert de serrage sur une distance telle que lorsque l'insert de serrage est comprimé axialement, les doigts de serrage ainsi formés sur les deux côtés, ne s'écartent pas par fléchissement, mais se déplacent parallèlement au plan médian en direction radiale.

22. Accessoire de câble fileté selon une des revendications 1 à 21, caractérisé en ce que la bague d'étanchéité (21) recouvrant extérieurement l'insert de serrage autobloquant (4), est prolongée, au point d'appui de la bague de serrage (9), se trouvant à l'opposé de la zone conique à angle aigu et à autoblocage, le prolongement s'étendant radialement vers l'intérieur au-delà de cette bague de serrage, et en formant une lèvre d'étanchéité (22) et/ou un garnissage intérieur de la douille filetée (2).

23. Accessoire de câble fileté selon une des revendications précédentes, caractérisé en ce que la contre-douille (3) présente un épaulement (25) ou un élément analogue formant butée, de même qu'une bague de contre-pression (26) appliquée contre cette butée, du côté dirigé vers la douille filetée (2), bague de contre-pression qui est engagée dans une gorge extérieure (27) de la bague de serrage (9) se trouvant axialement des deux côtés de la bague de contre-pression (26), qu'une surface de butée (28), agissant comme un cône, est prévue également dans la région de la bague de contre-pression (26) pour la déformation radiale de la bague de serrage (9) fendue lors d'un mouvement axial de la bague de serrage (9) par suite du mouvement de vissage de la contre-douille (3), et que l'insert de serrage autobloquant (4) est enfermé dans la région de la bague de serrage (9) située entre le cône intérieur (11) de la contre-douille (3) et la bague de contrepression (26).

24. Accessoire de câble fileté selon la revendication 23, caractérisé en ce que la bague de serrage (9) extérieure, s'étendant au-delà de la bague de contrepression (26), est garnie intérieurement d'un joint d'étanchéité (21), au moins, en particulier, dans la zone de l'insert de serrage autobloquant entouré par elle.

25. Accessoire de câble fileté selon la revendication 23 ou 24, caractérisé en ce que la bague de contre-pression (26) présente des cônes d'orientations contraires sur ses deux faces d'extrémité et sa forme en coupe longitudinale se rétrécit radialement vers l'intérieur suivant une configuration trapézoïdale ou triangulaire.

Fig. 1

Fig. 2

Fig. 3

Fig. 4

Fig. 5

## Fig. 6

Fig. 7

Fig. 8

Fig. 9

Fig. 11

### Fig 10

### Fig. 12

Fig. 13

Fig. 14

Fig. 15

Fig. 16

Fig. 17

Fig. 18

Fig. 19

Fig. 20